# EUROPEAN PATENT SPECIFICATION

(11) **EP 3 964 414 B1**
(45) Date of publication and mention of the grant of the patent: **05.07.2023**
(21) Application number: 21195173.6
(22) Date of filing: 07.09.2021
(51) Int. Cl.: B60W 30/18, B60W 60/00, B60W 30/09, B60W 30/095

(54) **APPARATUS AND METHOD FOR CONTROLLING DRIVING OF VEHICLE**
VORRICHTUNG UND VERFAHREN ZUR STEUERUNG DES ANTRIEBS EINES FAHRZEUGS
APPAREIL ET PROCÉDÉ DE COMMANDE D'ENTRAÎNEMENT DE VÉHICULE

(30) Priority: 08.09.2020 KR 20200114828
(43) Date of publication of application: 09.03.2022
(73) Proprietor: Hyundai Mobis Co., Ltd., Gangnam-gu Seoul 06141 (KR)
(72) Inventor: OH, Jun Hyeong, 16891 Gyeonggi-do (KR)
(74) Representative: dompatent von Kreisler Selting Werner - Partnerschaft von Patent- und Rechtsanwälten mbB

(56) References cited:
- EP-A1- 3 441 908
- WO-A2-2020/035728
- US-A1- 2019 197 902

## Description

### CROSS-REFERENCE TO RELATED APPLICATION

This application claims the benefit of priority to Korean Patent Application No. 10-2020-0114828, filed in the Korean Intellectual Property Office on September 08, 2020.

### TECHNICAL FIELD

The present invention relates to an apparatus and a method for controlling the driving of a vehicle, and more particularly, relates to an apparatus and a method for controlling the driving of a vehicle, capable of supporting the driving of the vehicle on a crossroad.

### BACKGROUND

A vehicle is the most general transportation in a modern society, and the number of people using the vehicle has been increased.

As a vehicle technology has developed, the movement to a long distance is easier, and the convenience of life is more improved. However, in a place, such as our nation, having the higher popular density, a road traffic condition has be worsened, and a traffic congestion has been seriously made.

Recently, studies and researches have been actively performed on a vehicle equipped with an advanced driver assist system (ADAS) that actively provides a vehicle status, a driver status, and a surrounding environment to reduce the burden on the driver and increase the convenience of the driver.

For example, the ADAS mounted in the vehicle includes cross traffic alert (CTA) or cross collision avoidance (CCA).

The cross traffic alert (CTA) or cross collision avoidance (CCA) is a collision avoidance system that determines the risk of collision with a counter vehicle or a crossing vehicle under the driving situation on the crossroad, and performs emergency braking in the collision situation.

The cross traffic alert (CTA) and the cross collision avoidance (CCA) senses and avoids the risk of collision with the vehicle, but there is recently required a technology of determining the status of the counter vehicle during the driving of the vehicle, thereby predicting the collision risk in advance and warning the driver of the collision risk before the vehicle enters the crossroad.

US 2019 197902 A1 discloses a system with the features of the preamble of claim 1. WO 2020 035728 A2 describes a system and a method for navigating a vehicle with safe distances. The system comprises at least one processing device programmed to receive an image of an environment of the vehicle, determine a planned navigational action and analyze the image to identify a target vehicle. However, according to the related art, the vehicle may not cope with when a surrounding vehicle deviates from a turning trajectory or may not cope with the collision risk with the surrounding vehicle turning simultaneously with the vehicle, while the vehicle is turning the crossroad in real time.

### SUMMARY

The present invention has been made to solve the above-mentioned problems occurring in the prior art while advantages achieved by the prior art are maintained intact.

An aspect of the present invention provides an apparatus and a method for controlling driving of a vehicle, capable of firmly coping with a driving situation on a crossroad.

The technical problems to be solved by the present invention are not limited to the aforementioned problems, and any other technical problems not mentioned herein will be clearly understood from the following description by those skilled in the art to which the present invention pertains.

According to an aspect of the present invention, an apparatus for controlling driving of a vehicle includes a sensor configured to sense a crossroad and to acquire information on driving of another vehicle, and a controller configured to generate a basic route for driving of the vehicle on the crossroad and control the driving of the vehicle based on the generated basic route, and generate a modified route or control a driving speed based on the information on the driving of the another vehicle, when the another vehicle invades a specific area of the basic route or is predicted to invade the specific area.

According to an embodiment, the basic route may be a driving route, on which the vehicle, after having entered the crossroad while having followed a center of a driving lane on which the vehicle has been driving, follows a center of a preset driving lane on the crossroad until the vehicle deviates from the crossroad.

According to an embodiment, the controller may perform a bias driving control operation, an acceleration control operation, or a deceleration control operation, based on information on a position of the another vehicle, information on a speed of the another vehicle, or information on a direction of the another vehicle.

According to an embodiment, the controller may generate a modified route in a direction away from the another vehicle, when the another vehicle positioned at a side portion of the vehicle enters the crossroad to invade the specific area of the basic route or is predicted to invade the specific area of the basic route.

According to an embodiment, the controller may decelerate while maintaining the basic route, when the another vehicle positioned at a side portion of the vehicle accelerates and cuts in front of the vehicle to invade the specific area of the basic route or is predicted to invade the specific area of the basic route.

According to an embodiment, the controller may generate a modified route in a direction away from the another vehicle and may decelerate, when the another vehicle positioned at a front side portion of the vehicle cuts in front of the vehicle to invade the specific area of the basic route or is predicted to invade the specific area of the basic route.

According to the invention, the controller generates a modified route in a direction away from the another vehicle and may accelerate, when the another vehicle positioned at a rear side portion of the vehicle invades the specific area of the basic route or is predicted to invade the specific area of the basic route such that the another vehicle is positioned or is predicted to be positioned at a rear portion of the vehicle.

According to another aspect of the present invention, a method for controlling driving of a vehicle may include generating, when sensing a crossroad, a basic route for driving of the vehicle on the crossroad and controlling the driving of the vehicle on the crossroad based on the generated basic route, acquiring information on driving of another vehicle, and generating a modified route or controlling a driving speed based on the information on the driving of the another vehicle, when the another vehicle invades a specific area of the basic route or is predicted to invade the specific area of the basic route.

According to an embodiment, the generating of the basic route for the driving of the vehicle on the crossroad and the controlling of the driving on the crossroad based on the basic route may include generating the basic route as a driving route, on which the vehicle, after having entered the crossroad while having followed a center of a driving lane on which the vehicle has been driving, follows a center of a preset driving lane on the crossroad until the vehicle deviates from the crossroad.

According to an embodiment, the generating of the modified route or the controlling of the driving speed based on information on driving of the another vehicle, when the another vehicle invades the specific area of the basic route or is predicted to invade the specific area of the basic route, includes performing a bias control operation, an acceleration control operation, or a deceleration control operation, based on information on a position of the another vehicle, information on a speed of the another vehicle, or information on a direction of the another vehicle.

According to an embodiment, the generating of the modified route or the controlling of the driving speed based on information on driving of the another vehicle, when the another vehicle invades the specific area of the basic route or is predicted to invade the specific area of the basic route, includes generating a modified route in a direction away from the another vehicle, when the another vehicle positioned at a side portion of the vehicle enters the crossroad to invade the specific area of the basic route or is predicted to invade the specific area of the basic route.

According to an embodiment, the generating of the modified route or the controlling of the driving speed based on information on driving of the another vehicle, when the another vehicle invades the specific area of the basic route or is predicted to invade the specific area of the basic route, includes decelerating while maintaining the basic route, when the another vehicle positioned at a side portion of the vehicle accelerates and cuts in front of the vehicle to invade the specific area of the basic route or is predicted to invade the specific area of the basic route.

According to an embodiment, the generating of the modified route or the controlling of the driving speed based on information on driving of the another vehicle, when the another vehicle invades the specific area of the basic route or is predicted to invade the specific area of the basic route, includes generating a modified route in a direction away from the another vehicle and decelerating, when the another vehicle positioned at a front side portion of the vehicle cuts in front of the vehicle to invade the specific area of the basic route or is predicted to invade the specific area of the basic route.

According to the invention, the generating of the modified route or the controlling of the driving speed based on information on driving of the another vehicle, when the another vehicle invades the specific area of the basic route or is predicted to invade the specific area of the basic route, includes generating a modified route in a direction away from the another vehicle and accelerating, when the another vehicle positioned at a rear side portion of the vehicle invades the specific area of the basic route or is predicted to invade the specific area of the basic route such that the another vehicle is positioned or is predicted to be positioned at a rear portion of the vehicle.

### BRIEF DESCRIPTION OF THE DRAWINGS

The above and other objects, features and advantages of the present invention will be more apparent from the following detailed description taken in conjunction with the accompanying drawings:
FIG. 1 is a block diagram illustrating an apparatus for controlling driving a vehicle, according to an embodiment of the present invention;
FIGS. 2 and 3 are views illustrating a basic route generated by an apparatus for controlling driving a vehicle, according to an embodiment of the present invention;
FIGS. 4 to 7 are views illustrating a basic route modified by an apparatus for controlling driving a vehicle, according to an embodiment of the present invention; and
FIG. 8 is a flowchart illustrating a method for controlling driving a vehicle, according to an embodiment of the present invention.

### DETAILED DESCRIPTION

Hereinafter, the present invention will be described in detail with reference to accompanying drawings. In adding the reference numerals to the components of each drawing, it should be noted that the identical or equivalent component is designated by the identical numeral even when they are displayed on other drawings. In addition, in the following description of the embodiment of the present invention, a detailed description of well-known features or functions will be ruled out in order not to unnecessarily obscure the gist of the present invention.

In describing the components of the embodiment according to the present invention, terms such as first, second, "A", "B", "(a)", "(b)", and the like may be used. These terms are merely intended to distinguish one component from another component, and the terms do not limit the nature, sequence or order of the constituent components. In addition, unless otherwise defined, all terms used herein, including technical or scientific terms, have the same meanings as those generally understood by those skilled in the art to which the present invention pertains. Such terms as those defined in a generally used dictionary are to be interpreted as having meanings equal to the contextual meanings in the relevant field of art, and are not to be interpreted as having ideal or excessively formal meanings unless clearly defined as having such in the present application.

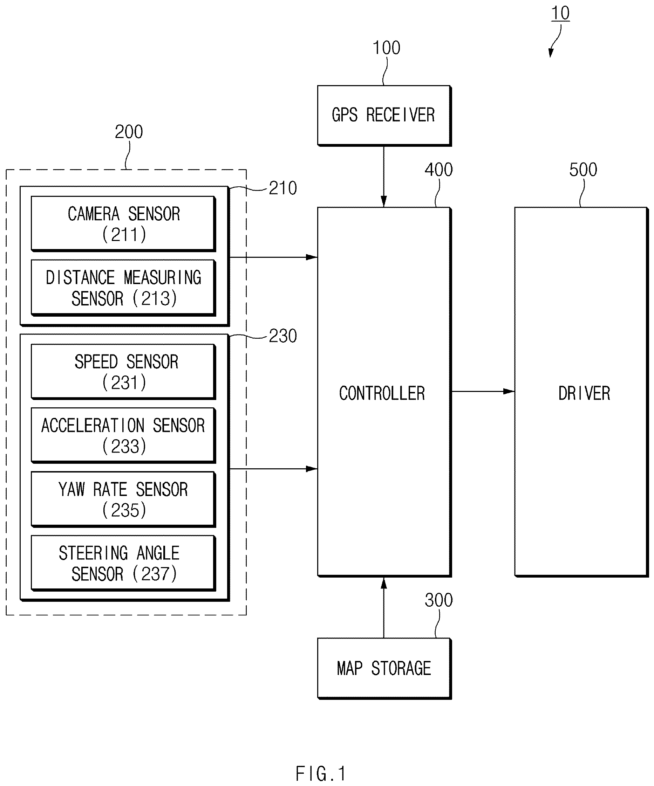

Hereinafter, embodiments of the present invention will be described in detail with reference to FIGS. 1 to 7.

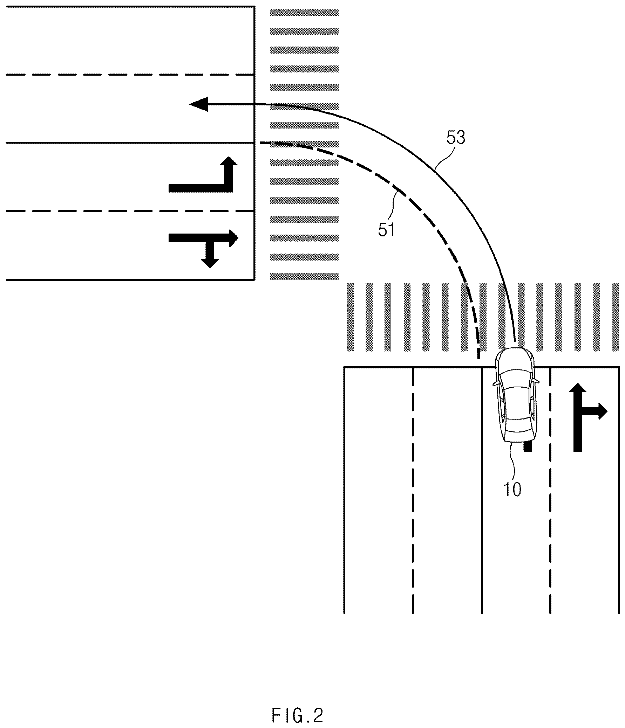

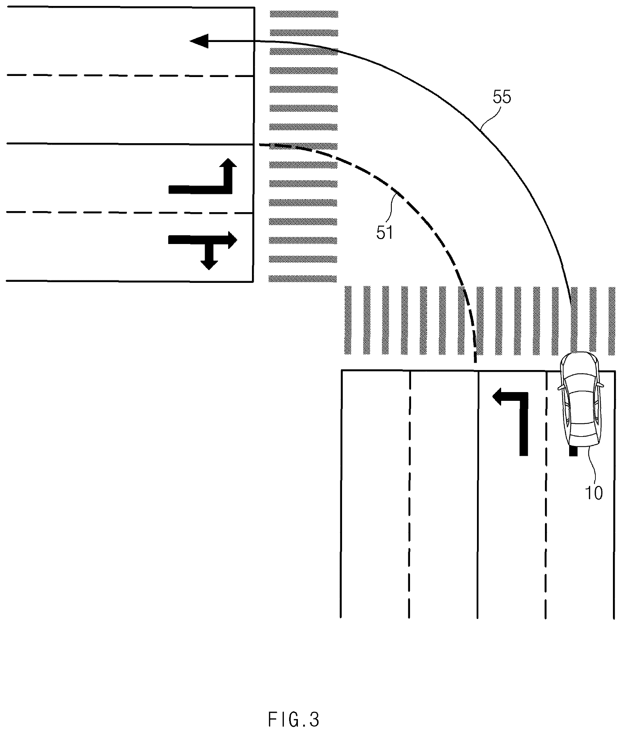

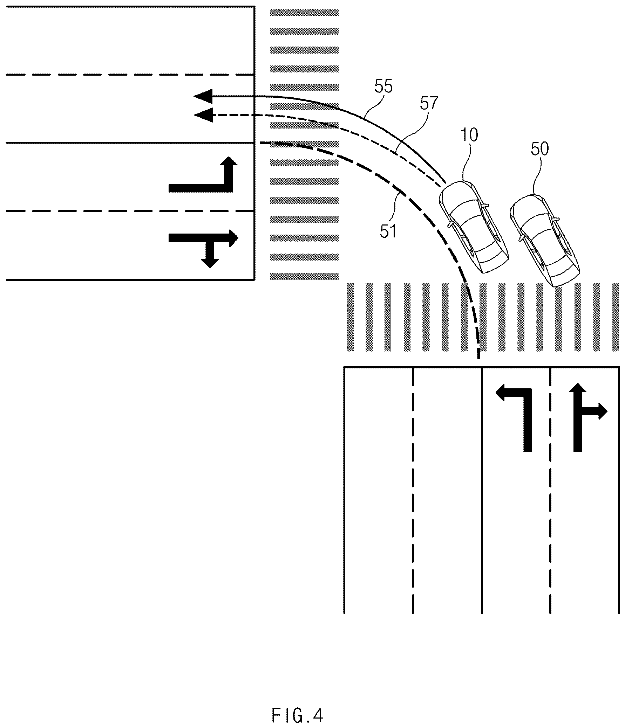

FIG. 1 is a block diagram illustrating an apparatus for controlling driving a vehicle, according to an embodiment of the present invention, FIGS. 2 and 3 are views illustrating a basic route generated by an apparatus for controlling driving a vehicle, according to an embodiment of the present invention, and FIGS. 4 to 7 are views illustrating a basic route modified by an apparatus for controlling driving a vehicle, according to an embodiment of the present invention.

Referring to FIG. 1, according to an embodiment of the present invention, an apparatus for controlling driving of a vehicle may include a global positioning system (GPS) receiver 100, a sensor 200, a map storage 300, a controller 400, and a driving device 500, which are provided in a host vehicle 10.

The GPS receiver 100 may measure a current position of the host vehicle 10 by using a signal received from a GPS satellite.

The sensor 200 may acquire information on a driving status of the host vehicle 10 and information on a driving status of an another vehicle 50 driving on a surrounding lane adjacent to a driving lane of the host vehicle 10.

The sensor 200 may include an external sensor 210 and an internal sensor 230 to acquire the information on the driving status of the host vehicle 10 and the information on the driving status of the another vehicle 50.

The external sensor 210 may include a camera sensor 211, which acquires information on an image obtained by photographing a peripheral portion of the host vehicle 10, and a distance measuring sensor 213, which acquires information on the distance to an object positioned around the host vehicle 10, and the distance measuring sensor 213 may include a LIDAR sensor or a RADAR sensor.

The external sensor 210 may collect the information on the driving status (such as a relative position, a relative speed, or information on the direction of the another vehicle 50) of the another vehicle 50 positioned within a preset detection range.

The camera sensor 211 may acquire the information on the image of the peripheral portion of the host vehicle 10 through an image sensor, and may perform image processing, such as noise reduction, for the acquired image.

The distance measuring sensor 213 may measure the distance between the host vehicle 10 and the another vehicle 50 by measuring arrival time of a laser pulse or an electromagnetic wave emitted from the another vehicle 50.

The internal sensor 230 may include a speed sensor 231, an acceleration sensor 233, a yaw rate sensor 235, and a steering angle sensor 237, and may acquire the information on the driving status, such as an absolute speed, an acceleration, a yaw rate, or a steering angle, of the host vehicle 10.

The map storage 300 may store, in the form of a database, information on a precise map, which distinguishes between lanes, and clearly shows a straight lane, or a crossroad, and may automatically and periodically update the information on the precise map through wireless communication or may manually update the information on the precise map by a user.

The driving device 500, which is a component to drive the host vehicle 10 in response to a control signal received from the controller 400, may include components (such as a brake, an accelerator, a transmission, or a steering wheel) to actually control vehicle driving.

For example, when the control signal of the controller 400 is a signal for indicating a deceleration, the brake of the driving device 500 may perform a driving control operation to decelerate. When the control signal of the controller 400 is a signal for indicating an acceleration, the accelerator of the driving device 500 may perform a driving control operation to accelerate. When the control signal of the controller 400 is a signal for indicating bias driving, the steering wheel of the driving device 500 may perform a bias driving control operation.

The controller 400 may recognize the absolute position of the another vehicle 50, based on the current position of the host vehicle 10, which is received from the GPS receiver 100, the information on the driving status of the host vehicle 10, and the information on the driving status of the another vehicle 50, which are received from the sensor 200.

In this case, the another vehicle 50 may be a vehicle driving on a surrounding lane of the driving lane on which the host vehicle 10 drives.

The controller 400 may perform a map-matching operation for the current position of the host vehicle 10 and the absolute position of the another vehicle 50 on the precise map, and may calculate the absolute speed, the absolute position, and the direction information of the another vehicle 50 driving on the surrounding lane by using the information on the driving status of the host vehicle 10 and the information on the driving status of the another vehicle 50 which are collected from the sensor 200.

For example, the controller 400 may calculate the absolute speed and the absolute position of the another vehicle 50 and information on the direction that the another vehicle 50 move forwards, by considering the relative speed of the another vehicle 50 and the relative distance to the another vehicle 50, which are collected through the external sensor 210, and the absolute speed and the steering angle of the host vehicle 10, which are measured through the internal sensor 230.

The controller 400 may recognize, as the crossroad, a position having a central line 51, which is curved, based on the information on the precise map and the information on lines of a road, which are acquired through the camera sensor 211.

Accordingly, when the host vehicle 10 recognizes the crossroad based on a front image of the host vehicle 10 during the driving on a straight road, the controller 400 may perform a control operation to generate a basic route, and may follow the basic route at a constant speed while passing through the crossroad by turning on the crossroad.

For example, referring to FIG. 2, when the host vehicle 10, which attempts to turn left on the crossroad, and recognizes the crossroad through the central line 51, which is curved, in the front image during the driving on a first lane of a straight road, the host vehicle 10 may generate a central line, which extends from a starting point to an end point of the crossroad, of the first lane as the basic route 53, while considering on an offset.

Accordingly, when only the host vehicle 10 drives on the crossroad, the controller 400 may perform a control operation to turn left while following the basic route 53 at a constant speed such that the host vehicle 10 passes through the crossroad.

For example, referring to FIG. 3, when the host vehicle 10, which attempts to turn left on the crossroad, recognizes the crossroad through the central line 51, which is curved, in the front image during the driving on a second lane of the straight road, the host vehicle 10 may generate a central line, which extends from a starting point to an end point of the crossroad, of the second lane as the basic route 55, while considering an offset.

Accordingly, when only the host vehicle 10 drives on the crossroad, the controller 400 may perform a control operation to turn left while following the basic route 55 at a constant speed such that the host vehicle 10 passes through the crossroad.

Although the description has been made in that the crossroad is recognized based on the front image, a technique of recognizing a crossroad, which is well known in the technical field of the present invention, may be employed.

Meanwhile, referring to FIG. 4, while the host vehicle 10 is driving while following the basic route 53 on the first lane of the crossroad, the another vehicle 50 positioned on the second lane, which is at a right side of the host vehicle 10, may drive by simultaneously turning left on the crossroad at a similar speed to that of the host vehicle 10.

In this case, the another vehicle 50 may invade the first lane on which the host vehicle 10 is driving, while turning left, such that the another vehicle 50 is positioned at the right side of the host vehicle 10. Accordingly, the another vehicle 50 may collide with the side surface of the host vehicle 10.

The controller 400 may collect information on the driving status of the another vehicle 50 within a specific range, and may determine whether the collision risk is present between the another vehicle 50 and the host vehicle 10, while the host vehicle 10 is turning on the first lane.

The controller 400 may generate a modified route 57 obtained by modifying the basic route 53 of the host vehicle 10 to prevent the collision between the host vehicle 10 and the another vehicle 50, when the another vehicle 50 invades the first lane or is predicted to invade the first lane such that the collision risk is present between the host vehicle 10 and the another vehicle 50.

Accordingly, the controller 400 may generate the modified route 57 more biased with respect to the central line 51, such that the basic route 53 is away from the another vehicle 50. Accordingly, the host vehicle 10 may follow the modified route 57 while turning at a constant speed to pass through the crossroad, thereby preventing the collision between the host vehicle 10 and the another vehicle 50.

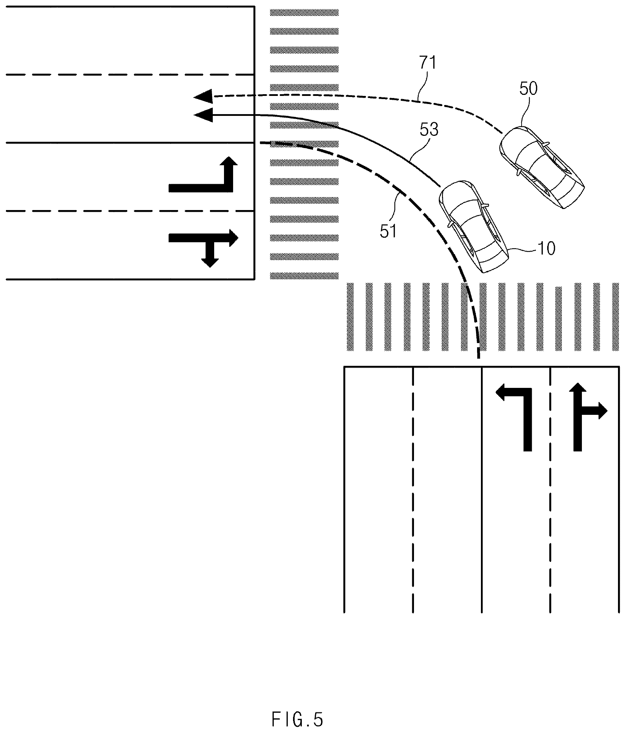

Meanwhile, referring to FIG. 5, while the host vehicle 10 is driving while following the basic route 53 on the first lane of the crossroad, the another vehicle 50 positioned on the second lane, which is at the right side of the host vehicle 10, may drive by simultaneously turning left on the crossroad at a similar speed to that of the host vehicle 10.

In this case, the another vehicle 50 may invade the first lane on which the host vehicle 10 is driving, by accelerating while turning left, such that the another vehicle 50 is positioned in front of the host vehicle 10. Accordingly, the another vehicle 50 may collide with the front portion of the host vehicle 10.

The controller 400 may generate the modified route 57 obtained by modifying the basic route 53 of the host vehicle 10 to prevent the collision between the host vehicle 10 and the another vehicle 50, when the another vehicle 50 invades the first lane or is predicted to invade the first lane such that the front portion of the host vehicle 10 may collide with the another vehicle 50.

Accordingly, the controller 400 may generate the modified route to maintain the direction of the basic route 53 and to control the speed of the host vehicle 10 to be more reduced than that of the another vehicle 50. Accordingly, the host vehicle 10 may follow the modified path while decelerating to pass through the crossroad.

Accordingly, the another vehicle 50 may be allowed to drive while preceding the host vehicle 10, thereby preventing the collision between the host vehicle 10 and the another vehicle 50.

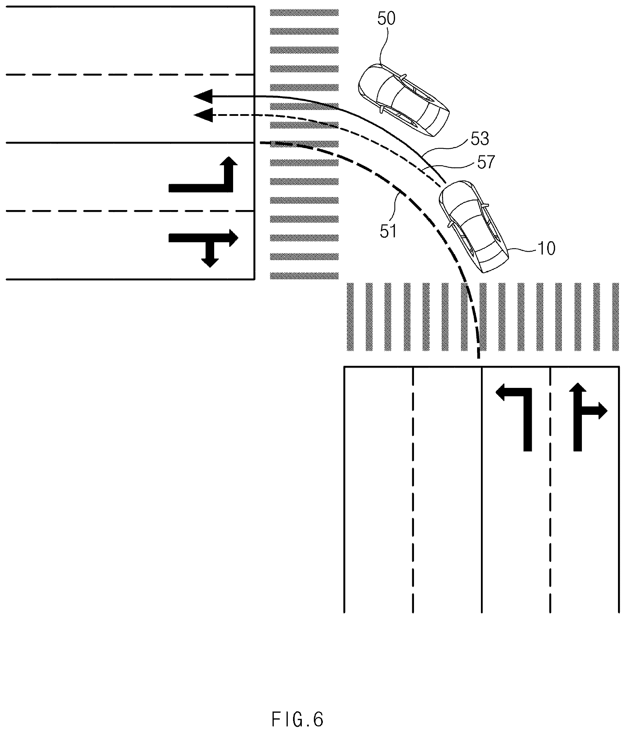

Referring to FIG. 6, while the host vehicle 10 is driving by following the basic route 53 on the first lane of the crossroad, the another vehicle 50 positioned in front of the host vehicle 10 on the second lane, may drive by simultaneously turning left on the crossroad at a similar speed to that of the host vehicle 10.

In this case, the another vehicle 50 may invade the first lane on which the host vehicle 10 is driving, while turning left, such that the another vehicle 50 is positioned in front of the host vehicle 10. Accordingly, the another vehicle 50 may collide with the front portion of the host vehicle 10.

The controller 400 may generate a modified route obtained by modifying the basic route 53 of the host vehicle 10, to prevent the collision between the host vehicle 10 and the another vehicle 50, when the another vehicle 50 invades the first lane or is predicted to invade the first lane such that the collision risk is present between the front portion of the host vehicle 10 and the another vehicle 50.

Accordingly, the controller 400 may generate the modified route 57 more biased toward the central line 51, such that the basic route 53 is away from the another vehicle 50. Accordingly, the host vehicle 10 may follow the modified route 57 while turning at a constant speed to pass through the crossroad, thereby preventing the collision between the host vehicle 10 and the another vehicle 50.

In this case, even if the host vehicle 10 follows the modified route 57 while turning at the constant speed to pass through the crossroad, when the collision risk is present between the front portion of the host vehicle 10 and the another vehicle 50, the speed of the host vehicle 10 is controlled to be more reduced than that of the another vehicle 50, such that the another vehicle 50 drives while preceding the host vehicle 10, thereby preventing the collision between the host vehicle 10 and the another vehicle 50.

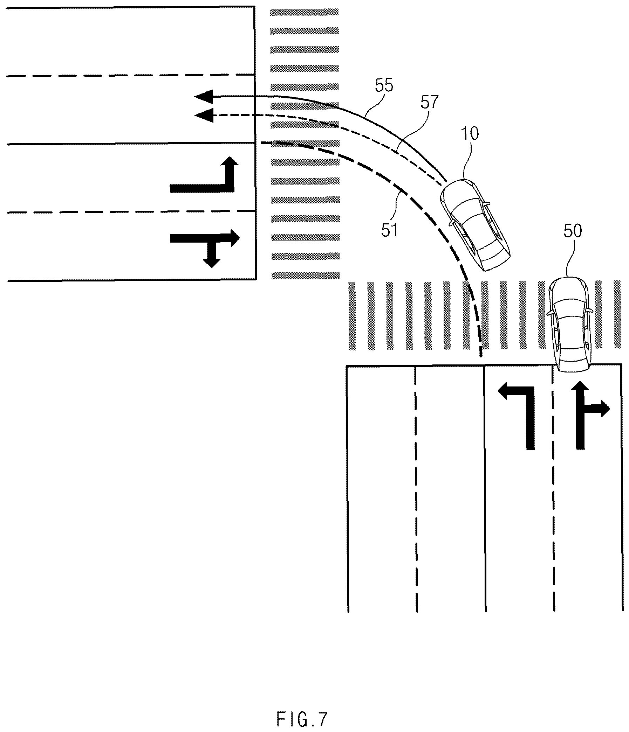

Meanwhile, referring to FIG. 7, while the host vehicle 10 is diving by following the basic route 53 on the first lane of the crossroad, the another vehicle 50 positioned in back of the host vehicle 10 on the second lane which is at the right side of the host vehicle 10, may drive by simultaneously turning left on the crossroad at a similar speed to that of the host vehicle 10.

In this case, the another vehicle 50 may invade the first lane on which the host vehicle 10 is driving, while turning left, such that the another vehicle 50 is positioned in back of the host vehicle 10. Accordingly, the another vehicle 50 may collide with the rear portion of the host vehicle 10.

The controller 400 may generate the modified route 57 obtained by modifying the basic route 53 of the host vehicle 10 to prevent the collision between the host vehicle 10 and the another vehicle 50, when the another vehicle 50 invades the first lane or is predicted to invade the first lane such that the collision risk is resent between the rear portion of the host vehicle 10 and the another vehicle 50.

Accordingly, the controller 400 may generate the modified route 57 more biased toward the central line 51, such that the basic route 53 is away from the another vehicle 50. Accordingly, the host vehicle 10 may follow the modified route 57 while turning at a constant speed to pass through the crossroad, thereby preventing the collision between the host vehicle 10 and the another vehicle 50.

In this case, even if the host vehicle 10 follows the modified route 57 while turning at a constant speed to pass through the crossroad, when the collision risk is present between the rear portion of the host vehicle 10 and the another vehicle 50, the speed of the host vehicle 10 is controlled to be more accelerated than that of the another vehicle 50, such that the host vehicle 10 is away from the another vehicle 50, thereby preventing the collision between the host vehicle 10 and the another vehicle 50.

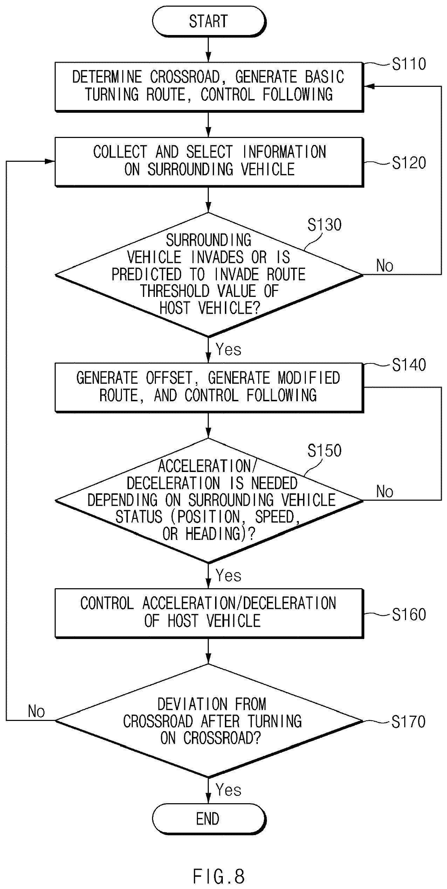

Hereinafter, a method for controlling the driving of a vehicle, according to another embodiment of the present invention will be described in detail with reference to FIG. 8.

FIG. 8 is a flowchart illustrating a method for controlling driving a vehicle, according to an embodiment of the present invention.

Hereinafter, it is assumed that the apparatus for controlling the driving of the vehicle of FIG. 1 performs a processor of FIG. 8.

First, the controller 400 may generate the basic route 53 on the crossroad and may control the host vehicle 10 to follow the basic route 53, when recognizing the crossroad by using a front image captured by the sensor 200 (S110).

The controller 400 may collect information on the driving status of the another vehicle 50 within a specific range, and may determine whether the collision risk is present between the another vehicle 50 and the host vehicle 10 while the host vehicle 10 is turning on the first lane (S120).

Thereafter, when the host vehicle 10 drives while following the basic route 53 and when the another vehicle 50 driving around the host vehicle 10 invades or is predicted to invade a specific area of the driving route of the host vehicle 10 (S130), the controller 400 may modify the driving route or the driving speed of the host vehicle 10, based on the driving information of the another vehicle 50, which is acquired from the sensor 200.

Accordingly, when the another vehicle 50 invades or is predicted to invade the specific area of the driving route of the host vehicle 10, and when the collision risk is present between the host vehicle 10 and the another vehicle 50, the controller 400 may generate the modified route 57 obtained by modifying the basic route 53 of the host vehicle 10 and may allow the host vehicle 10 to follow the modified route 57 while turning at a constant speed to pass through the crossroad, thereby preventing the collision between the host vehicle 10 and the another vehicle 50 (S140).

In this case, even if the host vehicle 10 follows the modified route 57 while turning at a constant speed to pass through the crossroad, when the collision risk is present between the front portion of the host vehicle 10 and the another vehicle 50 (S150), the speed of the host vehicle 10 is controlled to be more decelerated or accelerated than that of the another vehicle 50, thereby preventing the collision between the host vehicle 10 and the another vehicle 50 (S160), such that the host vehicle 10 deviates from the crossroad after turning on the crossroad (S170).

As described above, according to the present invention, the vehicle turning on the crossroad may calculate a turning trajectory by reflecting information on a line and an object, and may modify a route and a driving speed in real time, thereby performing a longitudinal control or a transversal control. The vehicle may calculate a basic route based on the lane on which the vehicle is currently driving, may provide bias driving, and an acceleration control, or a deceleration control based on the condition (the position, the speed, the heading, or the status) of a surrounding object while turning on the crossroad, thereby allowing the host vehicle 10 to turn with an appropriate turning radius on the crossroad, thereby preventing car crash with a vehicle closely turning.

In addition, the collision risk is reduced between vehicles in the turning situation on the crossroad, thereby allowing a driver to feel a burden and a fatigue less when turning on the crossroad such that the driver has a stable phycology.

The invention may firmly cope with the driving situation on the crossroad, thereby preventing collision with the vehicle closely driving.

Besides, a variety of effects directly or indirectly understood through the present invention may be provided.

Hereinabove, although the present invention has been described with reference to exemplary embodiments and the accompanying drawings, the present invention is not limited thereto, but may be variously modified and altered by those skilled in the art to which the present invention pertains without departing from the scope of the present invention claimed in the following claims.

Therefore, the exemplary embodiments of the present invention are provided to explain the scope of the present invention, but not to limit them, so that the scope of the present invention is not limited by the embodiments. The scope of the present invention should be construed on the basis of the accompanying claims.

## Claims

1. An apparatus for controlling driving of a vehicle (10), the apparatus comprising:
a sensor (200) configured to sense a crossroad and to acquire information on driving of another vehicle (50); and
a controller (400) configured to:
generate a basic route (53) for driving of the vehicle (10) on the crossroad and control the driving of the vehicle (10) based on the generated basic route (53); and
generate a modified route (57) or control a driving speed based on the information on the driving of the another vehicle (50), when the another vehicle (50) invades a specific area of the basic route (53) or is predicted to invade the specific area,
**characterized in that**
the controller (400) is configured to:
generate a modified route (57) in a direction away from the another vehicle (50) and accelerate, when the another vehicle (50) positioned at a rear side portion of the vehicle (10) invades the specific area of the basic route (53) or is predicted to invade the specific area of the basic route (53) such that the another vehicle (50) is positioned or is predicted to be positioned at a rear portion of the vehicle (10) .

2. The apparatus of claim 1, wherein the basic route (53) is configured as a driving route, on which the vehicle (10), after having entered the crossroad while having followed a center of a driving lane on which the vehicle (10) has been driving, follows a center of a preset driving lane on the crossroad until the vehicle (10) deviates from the crossroad.

3. The apparatus of claim 1, wherein the controller (400) is configured to:
perform a bias driving control operation, an acceleration control operation, or a deceleration control operation, based on information on a position of the another vehicle (50), information on a speed of the another vehicle (50), or information on a direction of the another vehicle (50).

4. The apparatus of claim 1, wherein the controller (400) is configured to:
generate a modified route (57) in a direction away from the another vehicle (50), when the another vehicle (50) positioned at a side portion of the vehicle (10) enters the crossroad to invade the specific area of the basic route (53) or is predicted to invade the specific area of the basic route (53) .

5. The apparatus of claim 1, wherein the controller (400) is configured to:
decelerate while maintaining the basic route (53), when the another vehicle (50) positioned at a side portion of the vehicle (10) accelerates and cuts in front of the vehicle (10) to invade the specific area of the basic route (53) or is predicted to invade the specific area of the basic route (53).

6. The apparatus of claim 1, wherein the controller (400) is configured to:
generate a modified route (57) in a direction away from the another vehicle (50) and decelerate, when the another vehicle (50) positioned at a front side portion of the vehicle (10) cuts in front of the vehicle (10) to invade the specific area of the basic route (53) or is predicted to invade the specific area of the basic route (53).

7. A method for controlling driving of a vehicle (10), the method comprising:
generating, when sensing a crossroad, a basic route (53) for driving of the vehicle (10) on the crossroad and controlling the driving of the vehicle (10) on the crossroad based on the generated basic route (53);
acquiring information on driving of another vehicle (50); and
generating a modified route (57) or controlling a driving speed based on the information on the driving of the another vehicle (50), when the another vehicle (50) invades a specific area of the basic route (53) or is predicted to invade the specific area of the basic route (53)
**characterized in that**
the generating of the modified route (57) or the controlling of the driving speed based on the information on the driving of the another vehicle (50), when the another vehicle (50) invades the specific area of the basic route (53) or is predicted to invade the specific area of the basic route (53), includes:
generating a modified route (57) in a direction away from the another vehicle (50) and accelerating, when the another vehicle (50) positioned at a rear side portion of the vehicle (10) invades the specific area of the basic route (53) or is predicted to invade the specific area of the basic route (53) such that the another vehicle (50) is positioned or is predicted to be positioned at a rear portion of the vehicle (10) .

8. The method of claim 7, wherein the generating of the basic route (53) for the driving of the vehicle (10) on the crossroad and the controlling of the driving on the crossroad based on the basic route (53) includes:
generating the basic route (53) as a driving route, on which the vehicle (10), after having entered the crossroad while having followed a center of a driving lane on which the vehicle (10) has been driving, follows a center of a preset driving lane on the crossroad until the vehicle (10) deviates from the crossroad.

9. The method of claim 7, wherein the generating of the modified route (57) or the controlling of the driving speed based on the information on the driving of the another vehicle (50), when the another vehicle (50) invades the specific area of the basic route (53) or is predicted to invade the specific area of the basic route (53), includes:
performing a bias driving control operation, an acceleration control operation, or a deceleration control operation, based on information on a position of the another vehicle (50), information on a speed of the another vehicle (50), or information on a direction of the another vehicle (50) .

10. The method of claim 7, wherein the generating of the modified route (57) or the controlling of the driving speed based on the information on the driving of the another vehicle (50), when the another vehicle (50) invades the specific area of the basic route (53) or is predicted to invade the specific area of the basic route (53), includes:
generating a modified route (57) in a direction away from the another vehicle (50), when the another vehicle (50) positioned at a side portion of the vehicle (10) enters the crossroad to invade the specific area of the basic route (53) or is predicted to invade the specific area of the basic route (53) .

11. The method of claim 7, wherein the generating of the modified route (57) or the controlling of the driving speed based on the information on the driving of the another vehicle (50), when the another vehicle (50) invades the specific area of the basic route (53) or is predicted to invade the specific area of the basic route (53), includes:
decelerating while maintaining the basic route (53), when the another vehicle (50) positioned at a side portion of the vehicle (10) accelerates and cuts in front of the vehicle (10) to invade the specific area of the basic route (53) or is predicted to invade the specific area of the basic route (53).

12. The method of claim 7, wherein the generating of the modified route (57) or the controlling of the driving speed based on the information on the driving of the another vehicle (50), when the another vehicle (50) invades the specific area of the basic route (53) or is predicted to invade the specific area of the basic route (53), includes:
generating a modified route (57) in a direction away from the another vehicle (50) and decelerating, when the another vehicle (50) positioned at a front side portion of the vehicle (10) cuts in front of the vehicle (10) to invade the specific area of the basic route (53) or is predicted to invade the specific area of the basic route (53).

## Patentansprüche

1. Vorrichtung zur Fahrsteuerung eines Fahrzeugs (10), wobei die Vorrichtung aufweist:
einen Sensor (200), der dazu ausgebildet ist, eine Kreuzung zu sensieren und Informationen zu dem Fahren eines anderen Fahrzeugs (50) zu erfassen; und
eine Steuerung (400), die für Folgendes ausgebildet ist:
Erzeugen einer Basisroute (53) zum Fahren des Fahrzeugs (10) auf der Kreuzung, und Fahrsteuerung des Fahrzeugs (10) basierend auf der erzeugten Basisroute (53); und
Erzeugen einer modifizierten Route (57) oder Steuern einer Fahrgeschwindigkeit basierend auf den Informationen zu dem Fahren des anderen Fahrzeugs (50), wenn das andere Fahrzeug (50) einen bestimmten Bereich der Basisroute (53) befährt oder den bestimmten Bereich voraussichtlich befahren wird,
**dadurch gekennzeichnet, dass**
die Steuerung (400) für Folgendes ausgebildet ist:
Erzeugen einer modifizierten Route (57) in einer Richtung weg von dem anderen Fahrzeug (50), und Beschleunigen, wenn das andere Fahrzeug (50), das an einem hinteren Seitenabschnitt des Fahrzeugs (10) positioniert ist, den bestimmten Bereich der Basisroute (53) befährt oder den bestimmten Bereich der Basisroute (53) voraussichtlich befahren wird, so dass das andere Fahrzeug (50) an einem hinteren Abschnitt des Fahrzeugs (10) positioniert ist oder voraussichtlich positioniert sein wird.

2. Vorrichtung nach Anspruch 1, wobei die Basisroute (53) als eine Fahrroute ausgebildet ist, auf der das Fahrzeug (10), nachdem es in die Kreuzung eingefahren ist, während es einer Mitte einer Fahrspur gefolgt ist, auf der das Fahrzeug (10) gefahren ist, einer Mitte einer vorbestimmten Fahrspur an der Kreuzung folgt, bis das Fahrzeug (10) von der Kreuzung abweicht.

3. Vorrichtung nach Anspruch 1, wobei die Steuerung (400) für Folgendes ausgebildet ist:
Durchführen eines Bias-Fahrsteuervorgangs, eines Beschleunigungssteuervorgangs, oder eines Abbremssteuervorgangs, basierend auf Informationen zu einer Position des anderen Fahrzeugs (50), Informationen zu einer Geschwindigkeit des anderen Fahrzeugs (50), oder Informationen zu einer Richtung des anderen Fahrzeugs (50).

4. Vorrichtung nach Anspruch 1, wobei die Steuerung (400) für Folgendes ausgebildet ist:
Erzeugen einer modifizierten Route (57) in einer Richtung weg von dem anderen Fahrzeug (50), wenn das andere Fahrzeug (50), das an einem Seitenabschnitt des Fahrzeugs (10) positioniert ist, in die Kreuzung einfährt, um den bestimmten Bereich der Basisroute (53) zu befahren, oder den bestimmten Bereich der Basisroute (53) voraussichtlich befahren wird.

5. Vorrichtung nach Anspruch 1, wobei die Steuerung (400) für Folgendes ausgebildet ist:
Abbremsen, während die Basisroute (53) beibehalten wird, wenn das andere Fahrzeug (50), das an einem Seitenabschnitt des Fahrzeugs (10) positioniert ist, beschleunigt und vor dem Fahrzeug (10) schneidet, um den bestimmten Bereich der Basisroute (53) zu befahren, oder den bestimmten Bereich der Basisroute (53) voraussichtlich befahren wird.

6. Vorrichtung nach Anspruch 1, wobei die Steuerung (400) für Folgendes ausgebildet ist:
Erzeugen einer modifizierten Route (57) in einer Richtung weg von dem anderen Fahrzeug (50), und Abbremsen, wenn das andere Fahrzeug (50), das an einem vorderen Seitenabschnitt des Fahrzeugs (10) positioniert ist, vor dem Fahrzeug (10) schneidet, um den bestimmten Bereich der Basisroute (53) zu befahren, oder den bestimmten Bereich der Basisroute (53) befahren wird.

7. Verfahren zur Fahrsteuerung eines Fahrzeugs (10), wobei das Verfahren umfasst:
Erzeugen, beim Sensieren einer Kreuzung, einer Basisroute (53) zum Fahren des Fahrzeugs (10) auf der Kreuzung und zur Fahrsteuerung des Fahrzeugs (10) auf der Kreuzung basierend auf der erzeugten Basisroute (53);
Erfassen von Informationen zu dem Fahren eines anderen Fahrzeugs (50); und
Erzeugen einer modifizierten Route (57) oder Steuern einer Fahrgeschwindigkeit basierend auf den Informationen zu dem Fahren des anderen Fahrzeugs (50), wenn das andere Fahrzeug (50) einen bestimmten Bereich der Basisroute (53) befährt oder den bestimmten Bereich der Basisroute (53) voraussichtlich befahren wird,
**dadurch gekennzeichnet, dass**
das Erzeugen der modifizierten Route (57) oder das Steuern der Fahrgeschwindigkeit basierend auf den Informationen zu dem Fahren des anderen Fahrzeugs (50), wenn das andere Fahrzeug (50) den bestimmten Bereich der Basisroute (53) befährt oder den bestimmten Bereich der Basisroute (53) voraussichtlich befahren wird, umfasst:
Erzeugen einer modifizierten Route (57) in einer Richtung weg von dem anderen Fahrzeug (50), und Beschleunigen, wenn das andere Fahrzeug (50), das an einem hinteren Seitenabschnitt des Fahrzeugs (10) positioniert ist, den bestimmten Bereich der Basisroute (53) befährt oder den bestimmten Bereich der Basisroute (53) voraussichtlich befahren wird, so dass das andere Fahrzeug (50) an einem hinteren Abschnitt des Fahrzeugs (10) positioniert ist oder voraussichtlich positioniert sein wird.

8. Verfahren nach Anspruch 7, wobei das Erzeugen der Basisroute (53) für das Fahren des Fahrzeugs (10) auf der Kreuzung und die Fahrsteuerung auf der Kreuzung basierend auf der Basisroute (53) umfasst:
Erzeugen der Basisroute (53) als eine Fahrroute, auf der das Fahrzeug (10) fährt, nachdem es in die Kreuzung eingefahren ist, während es einer Mitte einer Fahrspur gefolgt ist, auf der das Fahrzeug (10) gefahren ist, einer Mitte einer vorbestimmten Fahrspur an der Kreuzung folgt, bis das Fahrzeug (10) von der Kreuzung abweicht.

9. Verfahren nach Anspruch 7, wobei das Erzeugen der modifizierten Route (57) oder das Steuern der Fahrgeschwindigkeit basierend auf den Informationen zu dem Fahren des anderen Fahrzeugs (50), wenn das andere Fahrzeug (50) den bestimmten Bereich der Basisroute (53) befährt oder den bestimmten Bereich der Basisroute (53) voraussichtlich befahren wird, umfasst:
Durchführen eines Bias-Fahrsteuervorgangs, eines Beschleunigungssteuervorgangs, oder eines Abbremssteuervorgangs, basierend auf Informationen zu einer Position des anderen Fahrzeugs (50), Informationen zu einer Geschwindigkeit des anderen Fahrzeugs (50), oder Informationen zu einer Richtung des anderen Fahrzeugs (50).

10. Verfahren nach Anspruch 7, wobei das Erzeugen der modifizierten Route (57) oder das Steuern der Fahrgeschwindigkeit basierend auf den Informationen zu dem Fahren des anderen Fahrzeugs (50), wenn das andere Fahrzeug (50) den bestimmten Bereich der Basisroute (53) befährt oder den bestimmten Bereich der Basisroute (53) voraussichtlich befahren wird, umfasst:
Erzeugen einer modifizierten Route (57) in einer Richtung weg von dem anderen Fahrzeug (50), wenn das andere Fahrzeug (50), das an einem Seitenabschnitt des Fahrzeugs (10) positioniert ist, in die Kreuzung einfährt, um den bestimmten Bereich der Basisroute (53) zu befahren, oder den bestimmten Bereich der Basisroute (53) voraussichtlich befahren wird.

11. Verfahren nach Anspruch 7, wobei das Erzeugen der modifizierten Route (57) oder das Steuern der Fahrgeschwindigkeit basierend auf den Informationen zu dem Fahren des anderen Fahrzeugs (50), wenn das andere Fahrzeug (50) den bestimmten Bereich der Basisroute (53) befährt oder den bestimmten Bereich der Basisroute (53) voraussichtlich befahren wird, umfasst:
Abbremsen, während die Basisroute (53) beibehalten wird, wenn das andere Fahrzeug (50), das an einem Seitenabschnitt des Fahrzeugs (10) positioniert ist, beschleunigt und vor dem Fahrzeug (10) schneidet, um den bestimmten Bereich der Basisroute (53) zu befahren, oder den bestimmten Bereich der Basisroute (53) voraussichtlich befahren wird.

12. Verfahren nach Anspruch 7, wobei das Erzeugen der modifizierten Route (57) oder das Steuern der Fahrgeschwindigkeit basierend auf den Informationen zu dem Fahren des anderen Fahrzeugs (50), wenn das andere Fahrzeug (50) den bestimmten Bereich der Basisroute (53) befährt oder den bestimmten Bereich der Basisroute (53) voraussichtlich befahren wird, umfasst:
Erzeugen einer modifizierten Route (57) in einer Richtung weg von dem anderen Fahrzeug (50), und Abbremsen, wenn das andere Fahrzeug (50), das an einem vorderen Seitenabschnitt des Fahrzeugs (10) positioniert ist, vor dem Fahrzeug (10) schneidet, um den bestimmten Bereich der Basisroute (53) zu befahren, oder den bestimmten Bereich der Basisroute (53) voraussichtlich befahren wird.

## Revendications

1. Appareil de commande de circulation d'un véhicule (10), l'appareil comprenant :
un capteur (200) configuré pour détecter un carrefour et pour acquérir des informations sur la circulation d'un autre véhicule (50) ; et
un dispositif de commande (400) configuré pour :
générer un itinéraire de base (53) pour la circulation du véhicule (10) sur le carrefour et commander la circulation du véhicule (10) d'après l'itinéraire de base (53) généré ; et
générer un itinéraire modifié (57) ou commander une vitesse de circulation d'après les informations sur la circulation de l'autre véhicule (50), lorsque l'autre véhicule (50) envahit une zone spécifique de l'itinéraire de base (53) ou qu'il est prédit qu'il envahisse la zone spécifique,
**caractérisé en ce que**
le dispositif de commande (400) est configuré pour :
générer un itinéraire modifié (57) dans une direction en éloignement de l'autre véhicule (50) et accélérer, lorsque l'autre véhicule (50) positionné au niveau d'une portion de côté arrière du véhicule (10) envahit la zone spécifique de l'itinéraire de base (53) ou qu'il est prédit qu'il envahisse la zone spécifique de l'itinéraire de base (53) de telle sorte que l'autre véhicule (50) est positionné ou qu'il est prédit qu'il soit positionné au niveau d'une portion arrière du véhicule (10).

2. Appareil selon la revendication 1, dans lequel l'itinéraire de base (53) est configuré en tant qu'itinéraire de circulation, sur lequel le véhicule(10), après être entré sur le carrefour, tout en ayant suivi un centre d'une voie de circulation sur laquelle le véhicule (10) a circulé, suit un centre d'une voie de circulation préétablie sur le carrefour jusqu'à ce que le véhicule (10) s'écarte du carrefour.

3. Appareil selon la revendication 1, dans lequel le dispositif de commande (400) est configuré pour :
réaliser une opération de commande de circulation en biais, une opération de commande d'accélération, ou une opération de commande de décélération, d'après des informations sur une position de l'autre véhicule (50), des informations sur une vitesse de l'autre véhicule (50), ou des informations sur une direction de l'autre véhicule (50).

4. Appareil selon la revendication 1, dans lequel le dispositif de commande (400) est configuré pour :
générer un itinéraire modifié (57) dans une direction en éloignement de l'autre véhicule (50), lorsque l'autre véhicule (50) positionné au niveau d'une portion de côté du véhicule (10) entre sur le carrefour pour envahir la zone spécifique de l'itinéraire de base (53) ou qu'il est prédit qu'il envahisse la zone spécifique de l'itinéraire de base (53).

5. Appareil selon la revendication 1, dans lequel le dispositif de commande (400) est configuré pour :
décélérer tout en conservant l'itinéraire de base (53), lorsque l'autre véhicule (50) positionné au niveau d'une portion de côté du véhicule (10) accélère et coupe devant le véhicule (10) pour envahir la zone spécifique de l'itinéraire de base (53) ou qu'il est prédit qu'il envahisse la zone spécifique de l'itinéraire de base (53).

6. Appareil selon la revendication 1, dans lequel le dispositif de commande (400) est configuré pour :
générer un itinéraire modifié (57) dans une direction en éloignement de l'autre véhicule (50) et décélérer, lorsque l'autre véhicule (50) positionné au niveau d'une portion de côté avant du véhicule (10) coupe devant le véhicule (10) pour envahir la zone spécifique de l'itinéraire de base (53) ou qu'il est prédit qu'il envahisse la zone spécifique de l'itinéraire de base (53).

7. Procédé de commande de circulation d'un véhicule (10), le procédé comprenant :
la génération, lors du captage d'un carrefour, d'un itinéraire de base (53) pour la circulation du véhicule (10) sur le carrefour et la commande de circulation du véhicule (10) sur le carrefour d'après l'itinéraire de base (53) généré ;
l'acquisition d'informations sur la circulation d'un autre véhicule (50) ; et
la génération d'un itinéraire modifié (57) ou la commande d'une vitesse de circulation d'après des informations sur la circulation de l'autre véhicule (50), lorsque l'autre véhicule (50) envahit une zone spécifique de l'itinéraire de base (53) ou qu'il est prédit qu'il envahisse la zone spécifique de l'itinéraire de base (53)
**caractérisé en ce que**
la génération de l'itinéraire modifié (57) ou la commande de la vitesse de circulation d'après les informations sur la circulation de l'autre véhicule (50), lorsque l'autre véhicule (50) envahit la zone spécifique de l'itinéraire de base (53) ou qu'il est prédit qu'il envahisse la zone spécifique de l'itinéraire de base (53), inclut :
la génération d'un itinéraire modifié (57) dans une direction en éloignement de l'autre véhicule (50) et l'accélération, lorsque l'autre véhicule (50) positionné au niveau d'une portion de côté arrière du véhicule (10) envahit la zone spécifique de l'itinéraire de base (53) ou qu'il est prédit qu'il envahisse la zone spécifique de l'itinéraire de base (53), de telle sorte que l'autre véhicule (50) est positionné ou qu'il est prédit qu'il soit positionné au niveau d'une portion arrière du véhicule (10).

8. Procédé selon la revendication 7, dans lequel la génération de l'itinéraire de base (53) pour la circulation du véhicule (10) sur le carrefour et la commande de la circulation sur le carrefour d'après l'itinéraire de base (53) incluent :
la génération de l'itinéraire de base (53) en tant qu'itinéraire de circulation, sur lequel le véhicule (10), après être rentré sur le carrefour tout en ayant suivi un centre d'une voie de circulation sur laquelle le véhicule (10) a circulé, suit un centre d'une voie de circulation préétablie sur le carrefour jusqu'à ce que le véhicule (10) s'écarte du carrefour.

9. Procédé selon la revendication 7, dans lequel la génération de l'itinéraire modifié (57) ou la commande de la vitesse de circulation d'après les informations sur la circulation de l'autre véhicule (50), lorsque l'autre véhicule (50) envahit la zone spécifique de l'itinéraire de base (53) ou qu'il est prédit qu'il envahisse la zone spécifique de l'itinéraire de base (53), inclut :
la réalisation d'une opération de commande de circulation en biais, d'une opération de commande d'accélération, ou d'une opération de commande de décélération, d'après des informations sur une position de l'autre véhicule (50), des informations sur une vitesse de l'autre véhicule (50), ou des informations sur une direction de l'autre véhicule (50).

10. Procédé selon la revendication 7, dans lequel la génération de l'itinéraire modifié (57) ou la commande de la vitesse de circulation d'après les informations sur la circulation de l'autre véhicule (50), lorsque l'autre véhicule (50) envahit la zone spécifique de l'itinéraire de base (53) ou qu'il est prédit qu'il envahisse la zone spécifique de l'itinéraire de base (53), inclut :
la génération d'un itinéraire modifié (57) dans une direction en éloignement de l'autre véhicule (50), lorsque l'autre véhicule (50) positionné au niveau d'une portion de côté du véhicule (10) entre sur le carrefour pour envahir la zone spécifique de l'itinéraire de base (53) ou qu'il est prédit qu'il envahisse la zone spécifique de l'itinéraire de base (53).

11. Procédé selon la revendication 7, dans lequel la génération de l'itinéraire modifié (57) ou la commande de la vitesse de circulation d'après les informations sur la circulation de l'autre véhicule (50), lorsque l'autre véhicule (50) envahit la zone spécifique de l'itinéraire de base (53) ou qu'il est prédit qu'il envahisse la zone spécifique de l'itinéraire de base (53), inclut :
la décélération tout en conservant l'itinéraire de base (53), lorsque l'autre véhicule (50) positionné au niveau d'une portion de côté du véhicule (10) accélère et coupe devant le véhicule (10) pour envahir la zone spécifique de l'itinéraire de base (53) ou qu'il est prédit qu'il envahisse la zone spécifique de l'itinéraire de base (53).

12. Procédé selon la revendication 7, dans lequel la génération de l'itinéraire modifié (57) ou la commande de la vitesse de circulation d'après les informations sur la circulation de l'autre véhicule (50), lorsque l'autre véhicule (50) envahit la zone spécifique de l'itinéraire de base (53) ou qu'il est prédit qu'il envahisse la zone spécifique de l'itinéraire de base (53), inclut :
la génération d'un itinéraire modifié (57) dans une direction en éloignement de l'autre véhicule (50) et la décélération, lorsque l'autre véhicule (50) positionné au niveau d'une portion de côté avant du véhicule (10) coupe devant le véhicule (10) pour envahir la zone spécifique de l'itinéraire de base (53) ou qu'il est prédit qu'il envahisse la zone spécifique de l'itinéraire de base (53).
